# EUROPEAN PATENT APPLICATION

(11) **EP 2 990 707 A1**
(43) Date of publication of application: **02.03.2016**
(21) Application number: 15170652.0
(22) Date of filing: 04.06.2015
(51) Int. Cl.: F16L 9/147, B32B 1/08

(54) **A PIPE AND A PIPELINE COMPRISING TWO OR MORE PIPES**

(71) Applicant: Shell Internationale Research Maatschappij B.V., 2596 HR Den Haag (NL)
(72) Inventor: The designation of the inventor has not yet been filed
(74) Representative: Matthezing, Robert Maarten

(57) **Abstract**

The present invention provides a pipe (1), at least comprising:
- an external tubular support (2);
- an internal tubular liner (3); and
- a pressure-sensitive adhesive (4) between the external tubular support (2) and the internal tubular liner (3).

## Description

The present invention relates to a pipe. Various pipes are known in the art.

Thermoplastic pipes -often called 'liners'- are used as corrosion protection for carbon steel pipes in the oil and gas industry. Typically, such liners are installed loose, i.e. not bonded to the inner surface of the carbon steel pipe. The resistance against collapse of the liner as such depends on the stiffness of the material used for the liner, in most cases a thermoplastic material, its diameter and wall thickness.

A problem of the use of thermoplastic liners is that their stiffness reduces with temperature and service fluid uptake and as such limits the applications of thermoplastic liners for high temperature applications. Bonding the thermoplastic liner to the carbon steel pipe inner wall would increase the collapse resistance. However, this bonding would typically have to be done in a factory.

It is an object of the present invention to overcome or minimize the above problem.

It is a further object of the present invention to provide a low-cost corrosion-resistant pipe that can be easily produced nearby or at the location of use.

One or more of the above or other objects can be achieved by providing a pipe, at least comprising:
- an external tubular support;
- an internal tubular liner; and
- a pressure-sensitive adhesive ('PSA') between the external tubular support and the internal tubular liner.

It has surprisingly been found according to the present invention that a corrosion- and collapsible-resistant pipe can be produced in easy and cost-effective manner by using a PSA.

An advantage of the pipe according to the present invention is that it can be easily produced nearby or at the location of use, whilst using a conventional liner installation technique, and that the pipe is suitable for high temperature applications (such as > 65°C).

A further advantage of the present invention is that in some embodiments the PSA may fill the annulus space, i.e. the gap between the internal tubular liner and the external tubular support thereby reducing the room for gas accumulation, which is the main driver for liner collapse.

The person skilled in the art will readily understand that the external tubular support is not limited in any way, as long as it provides sufficient strength and stiffness. The external tubular support may comprise one or more layers. Typical examples of suitable materials for the external tubular support are (carbon) steel, concrete or a composite material based on polymers (optionally containing fibres).

Preferably, the external tubular support has a stiffness of at least 50 GPa, preferably at least 100 GPa, more preferably at least 200 GPa, as determined according to ASTM E8. Also it is preferred that the external tubular support comprises metal, in particular carbon steel.

Further, the person skilled in the art will readily understand that the internal tubular liner is not limited in any way, as long as it provides sufficient corrosion resistance against the fluids the pipe intends to carry.

Typically, the internal tubular liner has a stiffness that is lower than that of the external tubular support. Typically, the internal tubular liner has a stiffness of at most 50 GPa, as determined according to ASTM D638. Preferably, the internal tubular liner has a stiffness of at most 20 GPa, preferably at most 10 GPa, more preferably at most 5 GPa, as determined according to ASTM D638.

Suitably, the internal tubular liner comprises an elastomer, a thermoplastic polymer or a combination thereof. Examples of elastomers are NBR (Nitrile Butadiene Rubber), HNBR (Hydrogenated Nitrile Butadiene Rubber), EPDM (Ethylene Propylene Diene Rubber), FKM, FKKM, etc. Examples of thermoplastic polymers are PE, PP, PA, PVDF, etc.

The person skilled in the art will readily understand that the internal tubular liner can be reinforced using fibres such as glass fibres, carbon fibres or aramid fibres.

According to a preferred embodiment of the present invention, the internal tubular liner comprises a thermoplastic polymer, preferably HDPE (high density polyethylene).

Also, the person skilled in the art will readily understand that the PSA is not limited in any way. As the person skilled in the art is familiar with the concept of a PSA, this is not discussed here in detail. In general, a PSA is an adhesive which forms a bond when pressure is applied; no solvent, water, UV-light or heat is required to activate the adhesive. The degree of bond is influenced by the amount of pressure which is used to apply the adhesive to a surface.

Usually, PSAs are based on an elastomer compounded with a suitable tackifier. The elastomers can be based on acrylics, butyl rubber, ethylene-vinyl acetate, natural rubber, nitriles, silicone rubbers, styrene block copolymers, styrene-butadiene-styrene (SBS), styrene-ethylene/butylene-styrene (SEBS), styrene-ethylene/propylene (SEP), styrene-isoprene-styrene (SIS), etc. The PSA may be formulated such that optimum bonding is obtained even when in contact with water and/or hydrocarbons.

Preferably, the PSA has a peel strength of at most 10 N/mm, preferably at most 6 N/mm, more preferably at most 5 N/mm, as determined according to ASTM D6862-04. Preferably, the PSA has a peel strength of at least 3 N/mm, as determined according to ASTM D6862-04, in particular after 3 times testing (i.e. after 3 times peeling and re-applying) using ASTM D6862-04.

Preferably, the PSA is in direct contact with the external tubular support.

According to an especially preferred embodiment according to the present invention, the PSA is in direct contact with the internal tubular liner. If desired, an interim layer of fibres or Velcro (or the like) can be used to physically attach the PSA to the internal tubular liner.

In a further aspect, the present invention provides a pipeline comprising two or more pipes according to the present invention.

In an even further aspect, the present invention provides a method for producing a pipe according to the present invention, the method at least comprising the steps of:
(a) providing a tubular support;
(b) providing a tubular liner, which tubular liner is provided with a PSA on the outside thereof;
(c) inserting the tubular liner into the tubular support.

After production, the tubular support and the tubular liner may correspond to the external tubular support and internal tubular liner as described above.

The person skilled in the art will readily understand that the (internal) tubular liner could be installed using conventional liner installation techniques. As a mere example, a liner installation technique has been described in NO-DIG ROADSHOW, Scotland/Ireland, Winter 2008, Paper 2.2: The Development and Practical Application of Close-Fit PE Lining Technologies; author: John De Rosa. The bonding between the PSA on the outside of the tubular liner and (the inner wall of) the tubular support would be activated by the service conditions i.e. temperature and pressure. Hence, typically, no curing of the PSA is performed when providing the tubular liner in step (b) of the method according to the present invention. In some preferred embodiments, the PSA may fill the annulus space, i.e. the gap between the internal tubular liner and the external tubular support thereby reducing the room for gas accumulation, which is the main driver for liner collapse.

Hereinafter the invention will be further illustrated by the following non-limiting drawing. Herein shows:

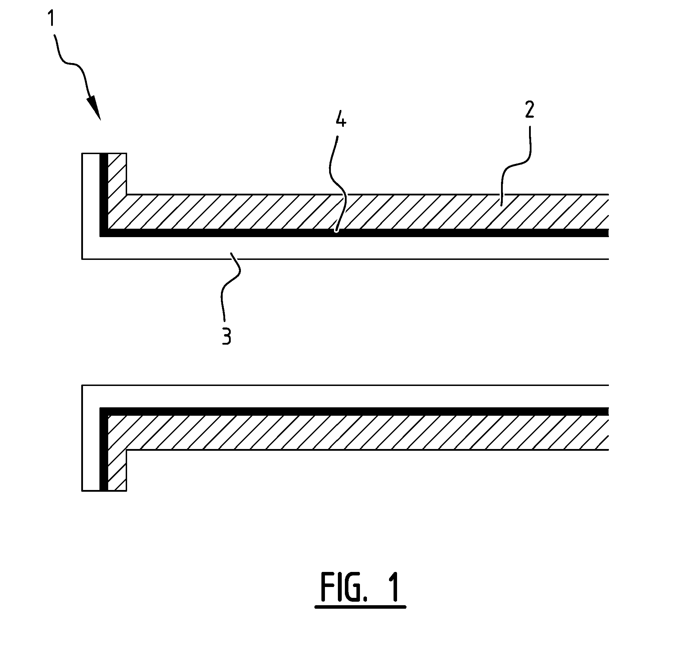

Fig. 1 schematically a cross-sectional view of a pipe according to the present invention.

Figure 1 shows a cross-sectional view of a pipe 1 comprising an external tubular support 2 made from carbon steel, an internal tubular liner 3 made from HDPE and a PSA 4 between the external tubular support 2 and the internal tubular liner 3. In the embodiment of Fig. 1 the PSA 4 is in direct contact with both the (internal wall of the) external tubular support 2 and the (external wall of the) internal tubular liner 3.

The person skilled in the art will readily understand that many modifications may be made without departing from the scope of the invention.

## Claims

1. A pipe, at least comprising:
- an external tubular support;
- an internal tubular liner; and
- a pressure-sensitive adhesive ('PSA') between the external tubular support and the internal tubular liner.

2. The pipe according to claim 1, wherein the external tubular support has a stiffness of at least 50 GPa, preferably at least 100 GPa, more preferably at least 200 GPa, as determined according to ASTM E8.

3. The pipe according to claim 1 or 2, wherein the external tubular support comprises metal, in particular carbon steel.

4. The pipe according to any of the preceding claims, wherein the internal tubular liner has a stiffness of at most 20 GPa, preferably at most 10 GPa, more preferably at most 5 GPa, as determined according to ASTM D638.

5. The pipe according to any of the preceding claims, wherein the internal tubular liner comprises a thermoplastic polymer, preferably HDPE.

6. The pipe according to any of the preceding claims, wherein the PSA has a peel strength of at most 10 N/mm, preferably at most 6 N/mm, more preferably at most 5 N/mm, as determined according to ASTM D6862-04.

7. The pipe according to any of the preceding claims, wherein the PSA is in direct contact with the external tubular support.

8. The pipe according to any of the preceding claims, wherein the PSA is in direct contact with the internal tubular liner.

9. A pipeline comprising two or more pipes according to one or more of the preceding claims 1-8.

10. A method for producing a pipe according to one or more of the preceding claims 1-8, at least comprising the steps of:
(a) providing a tubular support;
(b) providing a tubular liner, which tubular liner is provided with a PSA on the outside thereof;
(c) inserting the tubular liner into the tubular support.
